# EUROPEAN PATENT APPLICATION

(11) **EP 2 292 319 A1**
(43) Date of publication of application: **09.03.2011**
(21) Application number: 10171374.1
(22) Date of filing: 30.07.2010
(51) Int. Cl.: B01D 63/08

(54) **Self contained disposable tangential flow filtration liner**

(30) Priority: 04.08.2009 US 273390 P
(71) Applicant: MILLIPORE CORPORATION, Billerica Massachusetts 01821 (US)
(72) Inventor: Morrissey, Martin, Billerica, MA 01821 (US); Wong, Dennis, Billerica, MA 01821 (US)
(74) Representative: UEXKÜLL & STOLBERG

(57) **Abstract**

Tangential flow filtration device is provided wherein liners (16,22) are provided between the filtration element and the top and bottom holders (12,13) or manifolds. The liners incorporate the flow channels and inlet and outlet ports, as well as an optional sensor mount. The liners and filtration element (20) are independently compressed, so that decompression of the overall assembly does not decompress the liners and filtration element, thereby preventing leakage of hold-up volume within the fluid paths of the filtration element and liners.

## Description

This application claims priority of U.S. Provisional Application Serial No. 61/273,390 filed August 4, 2009, the disclosure of which is incorporated herein by reference.

### BACKGROUND OF THE INVENTION

Tangential Flow Filtration (TFF) is a separation process that uses membranes to separate components in a liquid solution or suspension on the basis of size or molecule weight differences. Applications include concentration, clarification, and desalting of proteins and other biomolecules such as nucleotides, antigens, and monoclonal antibodies; buffer exchange; process development; membrane selection studies; pre-chromatographic clarification to remove colloidal particles; depyrogenation of small molecules such as dextrose and antibiotics; harvesting, washing or clarification of cell cultures, lysates, colloidal suspensions and viral cultures; and sample preparation.

In TFF, the solution or suspension to be filtered is passed across the surface of the membrane in a cross-flow mode. The driving force for filtration is the transmembrane pressure, usually created with a peristaltic pump in disposable TFF applications. The velocity at which the filtrate is passed across the membrane surface also controls the filtration rate and helps prevent clogging of the membrane. Because TFF recirculates retentate across the membrane surface, membrane fouling is minimized, a high filtration rate is maintained, and product recovery is enhanced.

Conventional TFF devices are formed of a plurality of elements, which may include a pump, a feed solution reservoir, a filtration module and conduits for connecting these elements. In use, the feed solution is directed from the feed solution reservoir to the filtration module while the retentate from the filtration module is recirculated from the filtration module to the feed solution reservoir until the desired volume of retentate is obtained. The membrane is sandwiched between top and bottom manifolds or holders, which serve to provide accurate mechanical constraint against the internal hydraulic pressure of the device, and also serve to distribute the filtration stream across the multiple flow paths within the device. These manifolds or holders are typically made of stainless steel and must be cleaned and validated prior to each use, particularly in biopharmaceutical and other sanitary applications. This is an expensive and time-consuming process.

Where cleaning and validation steps are desired to be eliminated when replacing the filtration medium, disposable liners can be used instead of the reusable stainless steel liners. The liners incorporate the flow channels and inlet and outlet ports that were previously present in the manifolds, and isolate the process fluid from coming into contact with the TFF holder. The liners can be made of an inexpensive material and therefore are disposable after a single use, making it more cost effective to dispose of them than to clean the conventional manifolds. In addition, the liners can be pre-sterilized. In order to provide sufficient strength and rigidity under operating conditions, the liners can have a grid pattern of ribs that abut the holder plates to help prevent the liners from torquing under clamping force (see, for example, U.S. Patent No. 7,306,727, the disclosure of which is hereby incorporated by reference).

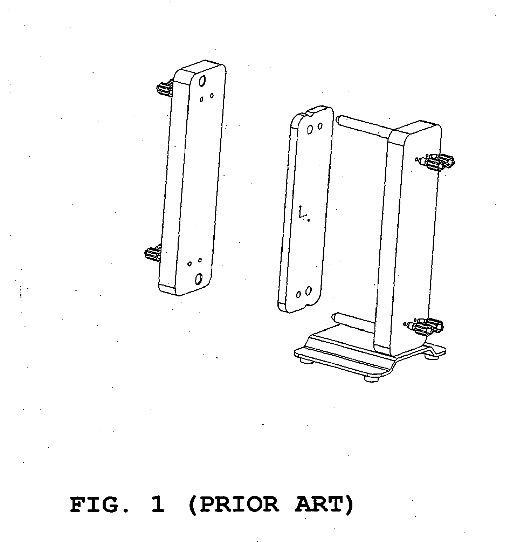

Compression of the manifolds and/or liners that make up the filtration module is critical to ensure efficient filtration and avoid fluid leakage. Conventionally, compression of these elements is achieved using a plurality of threaded rods, as shown in FIG. 1. The components of the device (e.g., manifolds or liners, filtration cassettes, top and bottom plates) are provided with apertures each dimensioned to receive a respective rod (two shown in FIG. 1), and are stacked, in the appropriate order, on the rods into sealing relationship. Nuts or the like are then threaded onto the rods to retain these elements under compression during filtration.

When the nuts on the TFF holder are loosened, such as after completion of a filtration run, the compression on sealing gaskets of the TFF cassette is lost. This causes any fluid help up or hold-up volume in the channels of the cassette to leak out of the module, which can be problematic, particularly when the fluid is toxic. For example, an emerging technique in bioprocess manufacturing is to conjugate toxins onto certain monoclonal antibodies (Mabs). This results in highly toxic process fluids, the leakage of which in the manner described above represents a health hazard to the user.

It therefore would be desirable to provide compression of certain of the TFF components independently of the overall compression of the device created by the holder in order to avoid leakage of fluids from the device.

### SUMMARY OF THE INVENTION

The shortcomings of the prior art are overcome by the embodiments disclosed herein, which include a tangential filtration assembly including one or more manifolds or preferably disposable liners that are sealed independently of the complete module.

In accordance with certain embodiments, a tangential flow filtration device is provided wherein one or more liners are located between the filtration element and the top and bottom holders. The liners include flow channels and inlet and outlet ports. The liners preferably are made of an inexpensive material and therefore are disposable after a single use, making it more cost effective to dispose of them than to clean the conventional manifolds fabricated from stainless steel. In addition, the liners can be pre-sterilized. In order to provide sufficient strength and rigidity under operating conditions, the liners can have a grid pattern of ribs that abut the holder plates to help prevent the liners from torquing under clamping force. The one or more liners can include one or more sensor ports or mounts, for removably affixing a sensor to the liner. If a sensor is present, a diaphragm is disposed between the sensor and the fluid passageway in the liner, isolating the sensor components from directly contacting fluid in the passageway. The sensor remains capable of sensing the pressure of the fluid in the passageway, but the presence of the diaphragm prevents the sensor from being contaminated by the fluid. A liner front plate includes screws or the like which connect to the filtration cassette and a second TFF liner plate to seal the same together independently of the holder plates.

In certain embodiments, disclosed is a self-contained disposable assembly consisting essentially of a first liner having a fluid inlet, a fluid outlet, at least one fluid path within said liner; a filtration member, and a second liner, wherein the first and second liners surround the filtration member and are compressed sufficiently so as to minimize or prevent leakage of fluid from this compressed assembly. It remains compressed even when not held between the outer plates. Any element that is not typically disposable with this assembly is considered to materially affect the novel and basic characteristics of this assembly.

### BRIEF DESCRIPTION OF THE DRAWINGS

FIG. 1 is an exploded view of a conventional TFF device shown with steel holders having through holes used to feed a TFF filter cassette; and
FIG. 2 is an exploded perspective view of a tangential flow filtration assembly in accordance with certain embodiments.

### DETAILED DESCRIPTION OF THE INVENTION

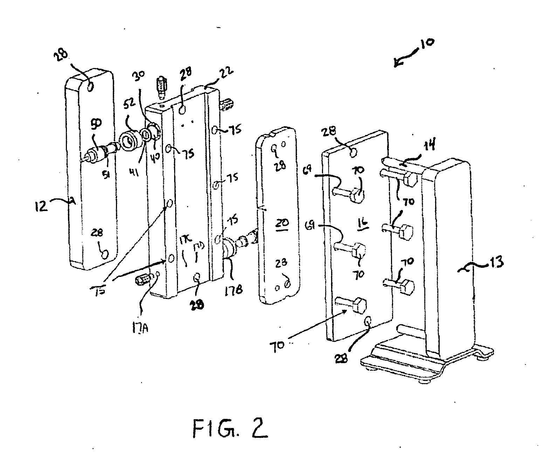

Turning to FIG. 2, there is shown a filtration device 10 in accordance with certain embodiments. The device 10 includes a front holder 12 and a spaced back plate 13. The holders 12, 13 are preferably in plate form and are made of stainless steel and are sufficiently rigid and durable to provide accurate and effective mechanical constraint of the assembly against internal hydraulic operating pressures, such as 50-60 psi. Apertures 28 are provided in the holders 12, 13 and in each layer of the assembly to accommodate tie rods or threaded pins or bolts 14 or other clamping device to secure the assembly together. Spacers (not shown) can be provided, and can be spring-loaded. In the embodiment shown, no filtration stream passageways are present in the holders 12, 13.

Positioned next to back holder 13 in the assembled state is a first liner 16. The liner 16 is preferably made of a disposable, inexpensive material, suitable for the application, that is acceptable for the particular assay, such as pharmaceutical assays, (and preferably is government approved). Suitable materials of construction include plastics, such as polystyrene, preferably polyolefins, such as polypropylene, polyethylene, copolymers and mixtures thereof. Polysulfone is particularly preferred in view of its strength and rigidity. The liner 16 is preferably molded, or may be formed by milling, drilling and other such methods. It includes one or more aperture 28 for receiving the respective tie rods 14. In certain embodiments, the liner 16 also includes a plurality of apertures 69, each configured to receive a corresponding clamping mechanism 70, such as a screw, bolt, pin, tie rod, or the like. Preferably the apertures 69 are spaced and located near the parameter of the liner 16 as shown. In the embodiment shown, there are six such apertures 69 and six corresponding clamping mechanisms 70, although those skilled in the art will appreciate that fewer or more could be used, provided that a sufficient number is used to effectuate a good seal among the components.

A filtration element 20 is sandwiched between first liner 16 and a second liner 22 in the assembled state. The filtration element 20 can be a single membrane, and is preferably a plurality of stacked membranes, such as stacked ultrafiltration or microfiltration membranes, most preferably provided in the form of a cassette. Although a single cassette of membranes is shown, those skilled in the art will appreciate that multiple cassettes can be used. Suitable cassettes are sold under the name PELLICON^{®} and are commercially available from Millipore Corporation. The cassette aligns with the liner 22.

As is conventional in the art, the liner 22 includes a first port 17A, one or more sub-ports 17C, a second port 17B and one or more sub-ports 17D. Port 17A can be used for introduction of feed or removal of retentate, depending on its orientation within the assembly, with port 17B for removal of permeate, while preventing admixture of the filtrate with the retentate or feed, as is conventional. Port 17A is in fluid communication with the one or more sub-ports 17C. Port 17A also is in fluid communication with the feed port of the cassette, e.g., a PELLICON^{®} cassette. Port 17B is in fluid communication with the one or more sub-ports 17D. Port 17B is only in communication with 17D and the permeate drain port of the cassette. The ports 17A and 17B may be located on opposite sides of the liner in order to provide adequate spacing and avoid interferences with other components. However, where spacing is sufficient or no interference occurs, they may be located on the same side. Each port 17A, 17B is in fluid communication with flow paths or passageways in the liner body that communicate with respective apertures to accommodate flow of feed, retentate or permeate as is conventional, thereby defining multiple flow paths for the filtration stream within the device. The passageways can be tapered, narrowing as they proceed away from their respective port, to normalize pressure at each of the sub-ports 17C and 17D.

In accordance with certain embodiments, the combination of the first liner 16, the one or more filter elements 20, and the second liner 22, are compressed independently of the compression of the entire assembly (e.g., the assembly including the holders 12 and 13). To that end, suitable receiving members 75 can be provided in the liner 22 to receive the clamping mechanism 70. By way of illustration, the preferred receiving members are threaded apertures, configured to threadingly receive threaded rods, screws, bolts and/or pins or the like extending from the first plate 16. Thus, in this embodiment the filtration element 20 is sandwiched between the first and second liners, and the threaded rods, screws, bolts and/or pins 70 or the like extending from the first liner 16 are screwed into respective threaded apertures 75 in the second liner 22 so as to compress the components in sealing relation. A torque wrench can be used to achieve the desired compression without over-tightening. In the embodiment shown, no corresponding receiving members are necessary in the filter member 20, since it is dimensioned to be narrower than the liner 22 and thus sits inwardly of the receiving members 75.

The independent compression of the liners can be achieved in other ways, such as with over-center toggle claims, cable ties, band clamps, etc., which would not require the use of apertures 75. In certain embodiments, one side of one or both of the liners 16, 22 can include a plurality of inter-engaging ribs. The ribs provide added rigidity to the liners, and can be formed in the molding process. The ribs, when present, are positioned on the side of the liner that contacts the holder plate 12 or 13. The ribs extend from one side of the liner to the other, except where interrupted by a port. When assembled, there is significant clamping force applied to the filter element 20 and the liner, with sealing taking place between the smooth side of the liner 16, 22 and the filter element 20. The ribs assist in effectively assemble the liners, in sealing engagement upon the application of pressure, without the necessity of having corresponding grooves in the holder plates to mate with the ribs. Accordingly, the respective surfaces of the holder plates that abut the grids of the liners can be flat, and need not be specially designed to fit the liners.

In certain embodiments, one or more sensors 50 are removably connected to mount ports in one or more of the disposable liners. For purposes of illustration, one port 30 is shown in liner 22. The port or ports 30 are each positioned to communication with a fluid path, so that a characteristic of the fluid in the fluid path (e.g., pressure) can be measured. A membrane or diaphragm 40, such as a diaphragm made of PVDF or polyolefin, preferably polyethylene, for example, is positioned over the port 30 in order to isolate, during operation, fluid in the fluid path from the sensor components. An O-ring 41 or the like can be used to seal the diaphragm 40 to the port. The membrane or diaphragm can be permanently attached to the port if desired.

In certain embodiments, the sensors are attached to the liner 22 using a diaphragm compression nut 52. The nut 52 is internally threaded, the internal threads corresponding to external threads on a sensor compression nut 51 positioned on the sensor 50 so that the sensor 50 may be screwed into the nut 52. The sensor compression nut 51 compresses the sensor flange into the larger diaphragm compression nut 52. The nut 52 is also externally threaded, the external threads corresponding to threads in the port 30B so that the nut 52 may be screwed into the port. A slip washer can be positioned between the compression nut 52 and the diaphragm. The nut 52 compresses the O-ring 41, diaphragm 40 and washer in place. Those skilled in the art will appreciate that other means of attaching the sensor to the mount port can be used, such as a press fit into the port or a suitable receptacle affixed to the port, clamps or fasteners that hold the sensor in place, etc.

In the assembled condition, the operative portion of the sensor is positioned directly against the membrane or diaphragm. The membrane or diaphragm is made of a sufficiently flexible material so that it deflects in response to pressure, remains continuous and does not break or lose the ability to isolate the sensor from the fluid path. The membrane or diaphragm can be semi-permeable or non-permeable. It is preferably of sterilizing grade.

The presence of two sensors, one measuring feed pressure and the other retentate pressure, allows the transmembrane pressure to be calculated, as transmembrane pressure is the average of the feed and retentate pressures less the filtrate pressure. The filtrate pressure can be determined in a conventional manner well known to those skilled in the art. In use, the removable sensors are preferably in electrical communication with a control unit, which can record the relevant process parameters, such as feed pressure, retentate pressure, transmembrane pressure, etc., and can control the parameters accordingly.

By removably connecting the sensors to the mount ports on the disposable liner(s) in accordance with the embodiments disclosed herein, the sensors remain isolated from the fluid paths and can be readily removed from the liners and reused, while the liners can be discarded after use. This results in quick and easy system set up.

The length of the ports 30 are such that preferably there is little or no deadleg between the diaphragm of the sensor port and the conduit in which the fluid to be sensed passes. This ensures that no fluid is lost or becomes stagnant.

Suitable sensors include electromechanical sensors, due to cost, accuracy, reliability and availability concerns. Electromechanical sensors include a strain gauge bonded to a thin metal diaphragm. Deformation of the diaphragm results in deformation of the strain gauge, sending a proportional electrical signal to the control unit. Those skilled in the art will appreciate that sensors that operate using different technologies also could be used.

## Claims

1. Filtration apparatus, comprising:
a first plate;
a second plate spaced from said first plate;
a filtration member positioned between said first plate and said second plate;
at least one liner positioned between said first plate and said filtration member, said liner having a fluid inlet, a fluid outlet, at least one fluid path within said liner;
at least one liner positioned between said second plate and said filtration member;
wherein in the assembled state, the combination of said at least one liner positioned between said first plate and said filtration member, said at least one liner positioned between said second plate and said filtration member, and said filtration member, are compressed independently of the compression of the combination of said first plate, said second plate, said at least one liner positioned between said first plate and said filtration member, said at least one liner positioned between said second plate and said filtration member, and said filtration member.

2. The filtration apparatus of claim 1, wherein relieving the compression of said combination of said first plate, said second plate, said at least one liner positioned between said first plate and said filtration member, said at least one liner positioned between said second plate and said filtration member, and said filtration member does not relieve the compression of said combination of said at least one liner positioned between said first plate and said filtration member, said at least one liner positioned between said second plate and said filtration member, and said filtration member.

3. A disposable assembly consisting essentially of a filtration member; a first liner having a fluid inlet, a fluid outlet, at least one fluid path within said first liner; and a second liner; said filtration member and said first and second liners being compressed together to an extent sufficient to prevent leakage of fluid therefrom.
